# EUROPÄISCHE PATENTSCHRIFT

(11) **EP 2 307 252 B1**
(45) Veröffentlichungstag und Bekanntmachung des Hinweises auf die Patenterteilung: **10.08.2016**
(21) Anmeldenummer: 09775883.3
(22) Anmeldetag: 27.05.2009
(51) Int. Cl.: B60W 40/02, B60W 40/06

(54) **FAHRERASSISTENZSYSTEM MIT REDUZIERTEN DATEN AUS EINER DIGITALEN STRAßENKARTE**
DRIVER ASSISTANCE SYSTEM HAVING REDUCED DATA FROM A DIGITAL ROAD MAP
SYSTÈME D ASSISTANCE AU CONDUCTEUR À DONNÉES RÉDUITES PROVENANT D' UNE CARTE ROUTIÈRE NUMÉRIQUE

(30) Priorität: 06.08.2008 DE 102008036559; 14.08.2008 DE 102008037705
(43) Veröffentlichungstag der Anmeldung: 13.04.2011
(73) Patentinhaber: ADC Automotive Distance Control Systems GmbH, 88131 Lindau (DE)
(72) Erfinder: MEHR, Wilfried, A-6922 Wolfurt (AT); FEY, Wolfgang, 88131 Bodolz (DE)
(86) Internationale Anmeldenummer: PCT/DE2009/000755
(87) Internationale Veröffentlichungsnummer: WO 2010/015218

(56) Entgegenhaltungen:
- WO-A-02/081252
- DE-A1- 19 839 193
- DE-A1-102004 048 468
- DE-A1-102006 017 178

## Beschreibung

Stand der Technik bei der Verkehrszeichenerkennung mit Umfeldsensoren im Auto, besonders bei der Erkennung von Geschwindigkeitsbegrenzungen mit einem Kamerasystem, ist die Kopplung des Fahrerassistenzsystems an ein im Fahrzeug verfügbares Navigationssystem, um aus der dort abgelegten digitalen Straßenkarte zusätzliche Informationen zu erhalten. Diese sind notwendig, um die aktuelle Geschwindigkeitsbegrenzung dem Fahrer möglichst genau mitzuteilen. Als Umfeldsensoren kommen je nach Anwendung des Fahrerassistenzsystems Kamera-, Radar-, Lidar- oder Ultraschallsysteme zum Einsatz.

Der heutige technische Stand der industrialisierten Kameras im Fahrzeug kann beispielsweise noch keine Ortseinfahrten an den Ortsschildern erkennen und bezieht daher die Geschwindigkeitsbegrenzung aus der digitalen Straßenkarte und dem aktuellen Ort aus den GPS-Navigationssystem.

Die Kopplung des Umfeldsensors an ein Navigationssystem führt zu deutlichen Mehrkosten des Fahrerassistenzsystems.

WO 02/081252 A zeigt ein Fahrerassistenzsystem mit drahtloser Kommunikationsverbindung mit den Merkmalen des Oberbegriffs von Anspruch 1.

Die Erfindung beschreibt eine Möglichkeit, die Kopplung des Umfeldsensors an ein Navigationssystem zu vermeiden. Die Enfindung ist durch die Ansprüche definiert.

Das erfindungsgemäße Fahrerassistenzsystem für ein Kraftfahrzeug umfasst einen Umfeldsensor und eine Auswerteeinheit für Sensordaten, wobei der Auswerteeinheit Daten aus einer Vorrichtung zur Positionsbestimmung und reduzierte Daten aus einer digitalen Straßenkarte zur Verfügung gestellt werden.

Die Daten aus der digitalen Straßenkarte sind in Abhängigkeit von der Funktion des Fahrerassistenzsystems reduziert. So werden gemäß einem Ausführungsbeispiel der Erfindung nur die Informationen aus der digitalen Straßenkarte berücksichtigt, die für die Verkehrszeichenerkennung relevant sind. Das Fahrerassistenzsystem is ohne kopplung an ein Navigationssystem ausgebildet.

In einem weiteren Ausführungsbeispiel vergleicht das Fahrerassistenzsystem die bestimmte Position des Kraftfahrzeugs mit den reduzierten Daten der digitalen Straßenkarte, um seine jeweilige Funktion ausüben zu können. Eine solche Funktion ist z.B. ein Geschwindigkeitsassistent.

Dient das Fahrerassistenzsystem beispielsweise der Verkehrszeichenerkennung, so kann die digitale Straßenkarte auf die Positionsangaben bzw. den Geltungsbereich von Verkehrszeichen reduziert werden. Soll dagegen beispielsweise die zulässige Höchstgeschwindigkeit durch das Fahrerassistenzsystem ermittelt werden, so kann die digitale Straßenkarte auf die Positionen von Ortseingängen und -ausgängen reduziert werden. Weitere reduzierte Daten sind z.B. Informationen über Baustellen, Brücken, Fahrbahnbeschaffenheit, Anzahl der Fahrspuren und Verlauf der aktuellen Fahrspur.

Zusammen mit der Kenntnis der aktuellen Position des Kraftfahrzeugs ermittelt das Fahrerassistenzsystem bevorzugt aus den reduzierten Daten diejenigen Daten, die zur Ausübung der gewünschten Funktion erforderlich sind. Beispielsweise durch den Vergleich der ermittelten Kraftfahrzeugposition mit den Ortschaftsbegrenzungspositionen bestimmt das Fahrerassistenzsystem, ob die zulässige Höchstgeschwindigkeit aktuell 50 km/h oder 100 km/h beträgt. Die Unterscheidung innerorts/außerorts kann alternativ auch bei der Lichtsteuerung (Abblendlicht/Femlicht) eingesetzt werden. Ein Spurhalteassistent würde dagegen als reduzierte Daten einer digitalen Straßenkarte beispielsweise auf den Verlauf der aktuellen Fahrspur und die Anzahl der in diesem Abschnitt vorhandenen Fahrspuren zurückgreifen.

Umfeldsensoren, die das Fahrzeugumfeld nur in horizontaler Richtung erfassen, können häufig eine Brücke nicht von einem auf der Fahrbahn befindlichen Hindernis (z.B. stehender LkW) unterscheiden. Zur Unterstützung oder als Grundlage für diese Unterscheidung, die durch die Auswerteeinheit getroffen werden muss, kommen gemäß einem weiteren bevorzugten Ausführungsbeispiel Informationen über Brücken (Lage der Brücke, evtl. zusätzlich Höhe der Brücke) als reduzierte Daten der digitalen Straßenkarte zum Einsatz.

Diese reduzierten Informationen sind auf einen nichtflüchtigen elektronischen Speicher gespeichert und werden der Auswerteeinheit (ECU) des Umfeldsensors, insbesondere der Kamera, zur Verfügung gestellt. Der nichtflüchtige elektronische Speicher kann insbesondere eine SD-Karte sein. Dieser Speicher ist aufgrund seines verbreiteten Einsatzes in der Unterhaltungselektronik besonders kostengünstig und daher insbesondere für Produkte im Nachrüstgeschäft interessant.

Da die relevanten Informationen für die Verkehrszeichenerkennung nur sehr wenig Speicher benötigen, kann dieser bevorzugt und kostengünstig in die ECU des Umfeldsensors bzw. der Kamera integriert werden. Eine Verbindung zum Navigationssystem entfällt.

Um die Informationen aus dem nichtflüchtigen Speicher mit der Umfeldinterpretation des Umfeldsensors zu synchronisieren, wird die aktuelle Position des Kraftfahrzeugs benötigt. Die aktuelle Kraftfahrzeugposition kann entweder aus einer integrierten GPS-Antenne oder vom Fahrzeugbus, z.B. gesendet von einem e-Call-System, bezogen werden.

Die Verkehrszeichenerkennung ist nur eine Anwendung dieser Erfindung im Bereich Fahrerassistenzsysteme. Grundsätzlich ist das Verfahren einer applikationsbezogenen bzw. funktionsbezogenen Reduzierung der Information einer digitalen Straßenkarte und deren Ablage auf einen nichtflüchtigen elektronischen Speicher zur Entkopplung vom Navigationssystem für viele Fahrzeugsysteme anwendbar.

Die wesentlichen Vorteile dieser Systemauslegung sind:
- Fahrzeugfunktionen, die Informationen einer digitalen Straßenkarte benötigen, benötigen keine Verknüpfung mit einem Navigationssystem
- Der Systemansatz der Erfindung ermöglicht den leichteren Einsatz im Nachrüstgeschäft.

## Patentansprüche

1. Fahrerassistenzsystem für ein Kraftfahrzeug umfassend einen Umfeldsensor und eine Auswerteeinheit für die Umfeldsensordaten, wobei der Auswerteeinheit Daten aus einer Vorrichtung zur Positionsbestimmung und reduzierte Daten aus einer digitalen Straßenkarte zur Verfügung gestellt werden, wobei
die Daten aus der digitalen Straßenkarte in Abhängigkeit von der Funktion des Fahrerassistenzsystems reduziert und auf einem nichtflüchtigen Speicher hinterlegt sind, **dadurch gekennzeichnet, dass**
das Fahrerassistenzsystem ohne eine Kopplung an ein Navigationssystem ausgebildet ist.

2. Fahrerassistenzsystem nach Anspruch 1, **dadurch gekennzeichnet, dass** das Fahrerassistenzsystem durch Vergleich der bestimmten Position des Kraftfahrzeugs mit den reduzierten Daten seine jeweilige Funktion ausüben kann.

3. Fahrerassistenzsystem nach einem der vorhergehenden Ansprüche, **dadurch gekennzeichnet, dass** der nichtflüchtige Speicher in die Auswerteeinheit des Umfeldsensors integriert ist.

4. Fahrerassistenzsystem nach einem der vorhergehenden Ansprüche, **dadurch gekennzeichnet, dass** die reduzierten Daten Positionsangaben von Verkehrszeichen und/oder Geltungsbereiche von Verkehrszeichen enthalten und das Fahrerassistenzsystem Verkehrszeichen erkennt.

5. Fahrerassistenzsystem nach einem der vorhergehenden Ansprüche, **dadurch gekennzeichnet, dass** die reduzierten Daten die Positionen von Ortseingängen undausgängen enthalten und das Fahrerassistenzsystem die zulässige Höchstgeschwindigkeit ermittelt und diese dem Fahrer mitteilt.

6. Fahrerassistenzsystem nach einem der vorhergehenden Ansprüche, **dadurch gekennzeichnet, dass** die reduzierten Daten Informationen über Brücken enthalten und das Fahrerassistenzsystem Brücken von auf der Fahrbahn befindlichen Hindernissen unterscheidet.

7. Fahrerassistenzsystem nach einem der vorhergehenden Ansprüche, **dadurch gekennzeichnet, dass** die reduzierten Daten Verläufe und die Anzahl von Fahrspuren enthalten und die Auswerteeinheit den Fahrer beim Halten seiner Fahrspur unterstützt.

## Claims

1. A driver assistance system for a motor vehicle, comprising an environment sensor and an evaluation unit for the environment sensor data, wherein the evaluation unit is provided with data from a positioning device and reduced data from a digital road map, wherein
the data from the digital road map are reduced, depending on the function of the driver assistance system, and stored in a non-volatile memory, **characterised in that** the driver assistance system is configured without connection to a route guidance system.

2. The driver assistance system according to claim 1, **characterised in that** the driver assistance system can perform its particular function by comparing the determined position of the motor vehicle with the reduced data.

3. The driver assistance system according to any one of the preceding claims, **characterised in that** the non-volatile memory is integrated into the evaluation unit of the environment sensor.

4. The driver assistance system according to any one of the preceding claims, **characterised in that** the reduced data contain positional information of traffic road signs and/or areas of application of traffic road signs and the driver assistance system recognises traffic road signs.

5. The driver assistance system according to any one of the preceding claims, **characterised in that** the reduced data contain the positions of entrances to and exits from a town and the driver assistance system determines the maximum permissible speed and informs the driver of this speed.

6. The driver assistance system according to any one of the preceding claims, **characterised in that** the reduced data contain information about bridges and the driver assistance system distinguishes between bridges and obstacles located on the road.

7. The driver assistance system according to any one of the preceding claims, **characterised in that** the reduced data contain courses and the number of lanes and the evaluation unit supports the driver in holding his lane.

## Revendications

1. Système d'assistance au conducteur pour un véhicule automobile, comprenant un capteur périphérique et une unité d'analyse pour les données de capteur périphérique, des données en provenance d'un dispositif de détermination de position et des données réduites en provenance d'une carte routière numérique étant mises à la disposition de l'unité d'analyse,
les données de la carte routière numérique étant réduites compte tenu de la fonction du système d'assistance au conducteur et enregistrées dans une mémoire non volatile, **caractérisé en ce que**
le système d'assistance au conducteur est constitué sans couplage à un système de navigation.

2. Système d'assistance au conducteur selon la revendication 1, **caractérisé en ce que** le système d'assistance au conducteur peut exercer sa fonction respective par comparaison de la position déterminée du véhicule automobile avec les données réduites.

3. Système d'assistance au conducteur selon l'une des revendications précédentes, **caractérisé en ce que** la mémoire non volatile est intégrée dans l'unité d'analyse du capteur périphérique.

4. Système d'assistance au conducteur selon l'une des revendications précédentes, **caractérisé en ce que** les données réduites contiennent des indications de position de panneaux routiers et/ou des zones de validité de panneaux routiers et **en ce que** le système d'assistance au conducteur identifie des panneaux routiers.

5. Système d'assistance au conducteur selon l'une des revendications précédentes, **caractérisé en ce que** les données réduites contiennent les positions d'entrée et de sortie d'agglomération, et **en ce que** le système d'assistance au conducteur détermine la vitesse maximale autorisée et la communique au conducteur.

6. Système d'assistance au conducteur selon l'une des revendications précédentes, **caractérisé en ce que** les données réduites contiennent des informations sur des ponts, et **en ce que** le système d'assistance au conducteur opère une distinction entre des ponts et des obstacles situés sur la chaussée.

7. Système d'assistance au conducteur selon l'une des revendications précédentes, **caractérisé en ce que** les données réduites contiennent des tracés et le nombre de files, et **en ce que** l'unité d'analyse aide le conducteur à se maintenir dans sa file.
